(19) Europäisches Patentamt
European Patent Office
Office européen des brevets

(11) **EP 2 048 383 B1**

(12) **EUROPÄISCHE PATENTSCHRIFT**

(45) Veröffentlichungstag und Bekanntmachung des Hinweises auf die Patenterteilung:
**05.09.2012 Patentblatt 2012/36**

(51) Int Cl.:
***F16B 25/10*** *(2006.01)*

(21) Anmeldenummer: **08105467.8**

(22) Anmeldetag: **01.10.2008**

(54) **Selbstbohrschraube**

Self-drilling screw

Vis autoforeuse

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **11.10.2007 DE 102007000848**

(43) Veröffentlichungstag der Anmeldung:
**15.04.2009 Patentblatt 2009/16**

(73) Patentinhaber: **HILTI Aktiengesellschaft**
**9494 Schaan (LI)**

(72) Erfinder:
• **Loichinger, Albert**
**9468 Sax (CH)**

• **Baumgartner, Michael**
**9462 Montlingen (CH)**
• **Matthiesen, Sven**
**88131 Lindau (DE)**

(74) Vertreter: **Söllner, Oliver**
**Hilti Aktiengesellschaft**
**Corporate Intellectual Property**
**Postfach 333**
**FL-9494 Schaan (LI)**

(56) Entgegenhaltungen:
**DE-A1- 4 205 059    DE-A1- 4 444 467**

**Beschreibung**

Die vorliegende Erfindung betrifft eine Selbstbohrschraube der im Oberbegriff von Patentanspruch 1 genannten Art. Derartige Selbstbohrschraube werden insbesondere zur Verschraubung von Metallblechen an Trägern genutzt.

Aus der US 2004/0018069 A1 ist eine Selbstbohrschraube mit einem Kopf und einem sich daran anschliessenden Schaft bekannt, der an seinem dem Kopf abgewandten Ende eine Bohrspitze mit einer erste Schneide in einem radial aussen liegenden Bereich und eine sich von radial innen bis nach radial aussen erstreckende zweite Schneide aufweist. Die erste Schneide liegt dabei in einem ersten spitzen Winkel und die zweite Schneide in einem zweiten spitzen Winkel zur Längsachse der Selbstbohrschraube, wobei der erste spitze Winkel grösser ist als der zweite spitze Winkel.

Von Nachteil bei einer derartigen Selbstbohrschraube ist, dass der Bohrlochdurchmesser in Abhängigkeit von der ausgeübten Anpresskraft beim Setzvorgang der Selbstbohrschraube variieren kann, da die Bohrspitze bei geringeren Anpresskräften taumelt. So wird bei zu geringen Anpresskräften ein zu grosses Loch gebohrt, was zu geringeren Haltewerten führt.

Die Aufgabe der vorliegenden Erfindung liegt darin, die oben genannten Nachteile zu vermeiden und eine Selbstbohrschraube bereitzustellen, mit der ein definierter Bohrlochdurchmesser über die gesamte Bohrlochlänge und gleichzeitig ein schneller Bohrvortrieb bei geringer Anpresskraft erreicht wird.

Dieses wird durch die in Patentanspruch 1 wiedergegebenen Massnahmen erreicht. Demnach ist die erste Schneide ausschliesslich in einem radial inneren Bereich der Bohrspitze angeordnet, wobei eine durch die erste Schneide definierte Hüllkegel-Mantelfläche mit einer maximalen Abweichung von +/- 10 % einer durch die zweite Schneide definierten Hüllkegel-Mantelfläche entspricht und wobei ein erster spitzer Winkel der ersten Schneide zur Längsachse mit einer maximalen Abweichung von +/- 5° einem zweiten spitzen Winkel der zweiten Schneide zur Längsachse entspricht. Durch die erfindungsgemässe Ausbildung der Bohrspitze steht auf der wenigstens einen ersten Schneide und der wenigstens einen äusseren Schneide nach dem Anbohren des zu penetrierenden Bauteils eine höhere Anpresskraft für jede Schneide zur Verfügung, wobei gleichzeitig eine symmetrische Verteilung der Schnittkräfte unabhängig von der Anpresskraft erreicht wird. Es lassen sich mit der erfindungsgemässen Selbstbohrschraube Bohrlöcher wohl definierten Durchmessers erzeugen, die zu einer von der Anpresskraft unabhängigen Haltekraft der gesetzten Selbstbohrschraube führen. Ferner ist der Bohrvortrieb deutlich verbessert.

In einer technisch leicht umsetzbaren Ausgestaltung der Erfindung erstreckt sich die erste Schneide ausgehend von einem der Längsachse nahen inneren radialen Bereich bis zu einem ersten Radius, während sich die zweite Schneide von einem Aussenradius der Bohrspitze zur Längsachse hin bis zu einem zweiten Radius hin erstreckt. Hierdurch werden auf Grund einer grösseren Spanungstiefe dickere Späne erzeugt und es wird an den Spänen weniger Oberfläche generiert, die damit weniger Leistung der Schneide verlangen. Es ergibt sich daher auch eine geringere Wärmeerzeugung, eine geringere Verschleissbelastung und damit auch eine geringere Ausfallrate.

Von Vorteil ist es dabei ferner, wenn der erste Radius und der zweite Radius mit einer maximalen Toleranz von +/- 20 % gleich gross sind, wodurch eine optimale Auslegung der Bohrspitze erzielt wird.

Vorteilhaft ist der erste Radius durch die Funktion

$$\text{erster Radius} = \text{Aussenradius} / \text{Konstante } x$$

definiert, wobei die Konstante x einen Wert von 1,1 bis 1,7 aufweist. Mit dieser Aufteilung werden die Radialkraftanteile der Schnittkraft an den einzelnen Schneiden balanciert und heben sich damit auf. Es werden somit Bohrungen mit einem definierten Bohrdurchmesser erzeugt, der nicht vom Anwender beeinflussbar ist.

Günstig ist es ferner, wenn die Schneiden jeweils eine Höhe über ihrer jeweiligen Schneidenbasis von 0,05 mm bis 0,5 mm aufweisen, wodurch die Schneide aussreichend tief in das zu spanende Material eindringen kann.

Von Vorteil kann es ferner sein, wenn am freien Ende der Bohrspitze wenigstens eine quer zur Längsachse liegende dritte Schneide vorgesehen ist, an die sich die erste Schneide nach radial aussen hin anschliesst. Mit der als Querschneide fungierenden dritten Schneide wird eine stabilere Spitze erzeugt, die auch bei der zu Bohrbeginn hohen Flächenpressung ohne Bruch arbeitet.

In den Zeichnungen ist die Erfindung in einem Ausführungsbeispiel dargestellt.

Es zeigen:

Fig. 1    eine erfindungsgemässe Selbstbohrschraube,

Fig. 2    ein Detail der Selbstbohrschraube gemäss der Markierung II aus Fig. 1,

Fig. 3    das Detail der Selbstbohrschraube aus Fig. 2 in einem Untergrund,

Fig. 4     ein Detail einer weiteren erfindungsgemässen Selbstbohrschraube analog zu Fig. 3.

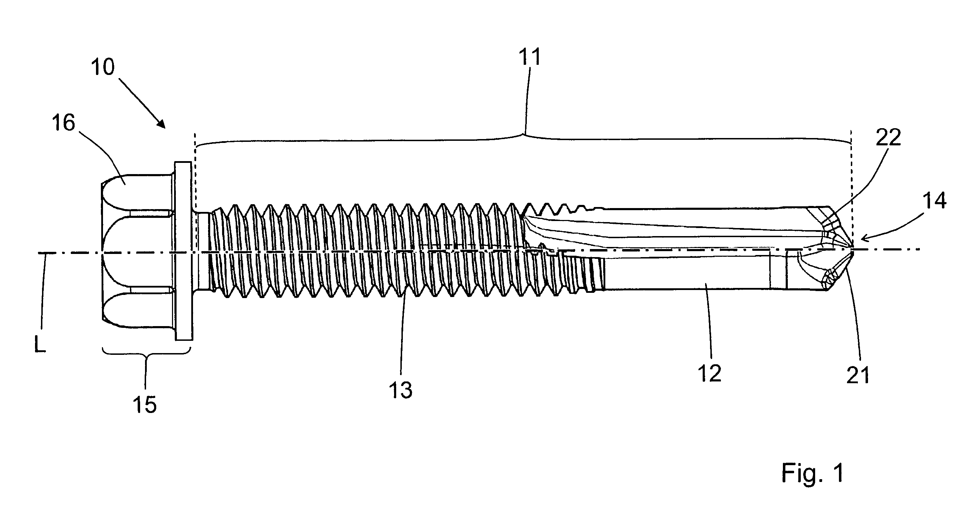

Die in den Figuren 1 bis 3 dargestellte Selbstbohrschraube 10 weist einen ein Gewinde 13 tragenden Schaft 11 auf, an dessen einem Endbereich eine Bohrspitze 12 und an dessen gegenüberliegenden anderen Ende ein Kopf 15 angeordnet ist. Eine Längsachse L der Selbstbohrschraube definiert dabei eine axiale Richtung der Selbstbohrschraube 10. Der Kopf 15 weist ein als Mehrkant ausgebildetes Drehmitnahmemittel 16 für ein Schraubwerkzeug, wie einen Schrauberbit oder einen Schraubenschlüssel auf.

Die Bohrspitze weist an ihrem freien Ende 14 wenigstens eine erste Schneide 21 und wenigstens eine zweiten Schneide 22 auf, wobei die erste Schneide 21 ausschliesslich in einem radial - bezogen auf die Längsachse L - inneren Bereich der Bohrspitze 12 angeordnet ist und die zweite Schneide 22 ausschliesslich in einem radial äusseren Bereich der Bohrspitze 12 liegt.

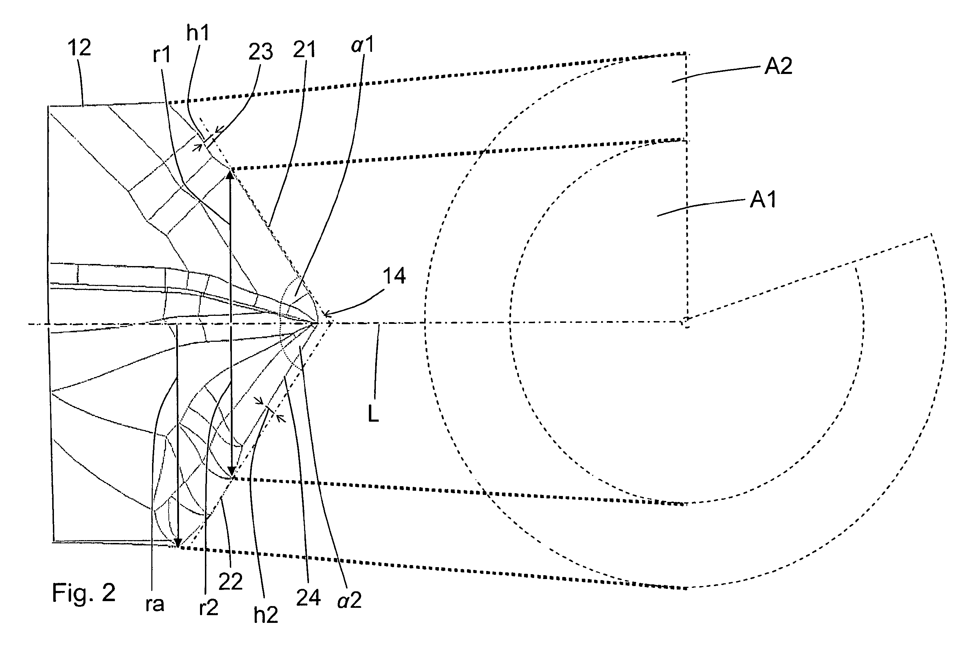

Wie insbesondere aus Fig. 2 mit den abgewickelten Hüllkegel-Mantelflächen A1 und A2 zu entnehmen ist, wird durch die erste Schneide 21 eine Hüllkegel-Mantelfläche A1 (die bei einer Rotation der Selbstbohrschraube durch die Schneide aufgespannt wird) definiert, die mit einer maximalen Abweichung von +/- 10 % einer durch die zweite Schneide 22 definierten Hüllkegel-Mantelfläche A2 entspricht.
Die erste Schneide 21 liegt zur Längsachse L in einem ersten spitzen Winkel alpha1, der mit einer maximalen Abweichung von +/- 5° einem zweiten spitzen Winkel alpha2 der zweiten Schneide 22 zur Längsachse L entspricht. Ferner sind die erste Schneide 21 und die zweite Schneide 22 jeweils an gestuften Kanten (siehe insbesondere Figuren 2-3) der Bohrspitze 12 angeordnet und weisen jeweils eine Höhe h1 bzw. eine Höhe h2 über ihrer jeweiligen Schneidenbasis 23, 24 von vorzugsweise 0,05 mm bis 0,5 mm auf. Die Höhen h1, h2 können dabei auch unterschiedlich gross sein.

Die Fläche der Hüllkegel-Mantelfläche A1 ist dabei durch die Funktion

**Hüllkegel-Mantelfläche A1 = ((erster Radius r1) x (erster Radius r1)) / sin(Winkel alpha1) x Pi** gegeben.

Ausgehend von einem der Längsachse L nahen axialen Bereich am freien Ende 14 (siehe insbesondere Fig. 2) der Bohrspitze 12 erstreckt sich die erste Schneide 21 bis zu einem ersten Radius r1, während sich die zweite Schneide 22 von einem Aussenradius ra der Bohrspitze 12 zur Längsachse L hin bis zu einem zweiten Radius r2 hin erstreckt. Der Radius r1 und der Radius r2 sind dabei vorzugsweise innerhalb einer Toleranz von +/- 20 % gleich gross.
Der erste Radius r1 ist dabei durch die Funktion

**erster Radius r1 = Aussenradius ra / Konstante x**

definiert, wobei die Konstante x einen Wert im Bereich von 1,1 bis 1,7 aufweist.

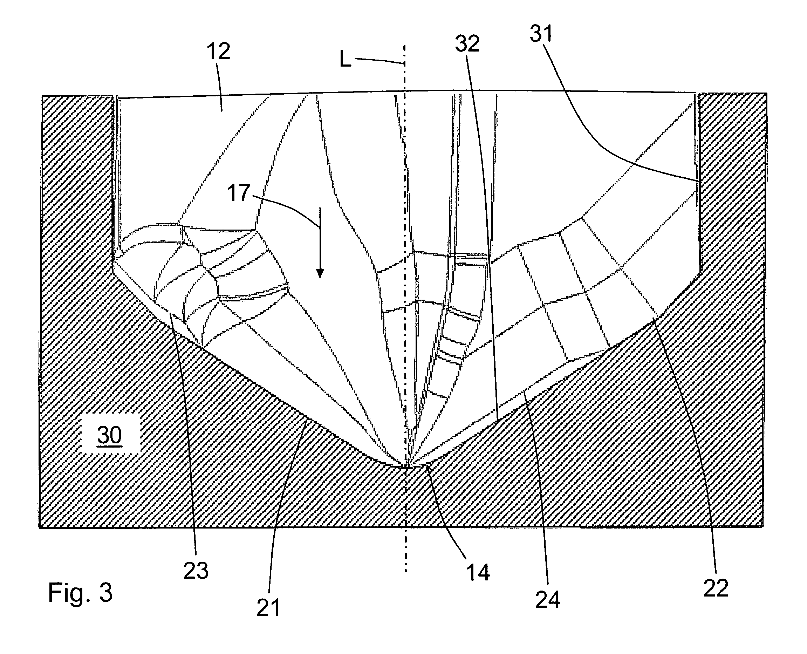

In Fig. 3 ist die Bohrspitze 12 der Selbstbohrschraube 10 (aus Fig. 1) bei einem Anbohrvorgang in ein Bauteil 30, wie z. B. einem Stahlträger, unter Ausformung eines Bohrlochs 31 eingedrungen. Im Normalfall leisten nur die Schneiden 21, 22 Spanungsarbeit und tragen Material des Bauteils 30 ab. Die Schneidenbasen 23, 24 sind hingegen beabstandet zur innenliegenden Wand 32 des Bohrlochs 31 und damit entlastet, wodurch eine höhere Anpresskraft für die in Einschraubrichtung 17 vorstehenden erste Schneide 21 und zweite Schneide 22 zur Verfügung steht. Beim Beginn des Anbohrens, bis zum Eintauchen der radial äusseren zweiten Scheidkante 22, kann auch die Schneidenbasis 24 der radial inneren ersten Schneide 21 im Eingriff mit dem Bauteil 30 sein.

Zur Reibungsverminderung kann die Selbstbohrschraube wenigstens im Bereich des Schaftes 11 noch mit einer reibungsmindernden Beschichtung, wie z. B. einem Wachs oder Öl, ausgerüstet sein.

Es versteht sich, dass anstelle der hier dargestellten zwei Schneiden 21, 22 auch mehr, z. B. drei oder vier, Schneiden vorgesehen sein könnten. So könnten z. B. auch zwei radial innenliegende erste Schneiden vorgesehen sein, die auch zueinander wieder radial versetzt sind. Ferner könnten auch zwei radial aussenliegende zweite Schneiden vorgesehen sein, die ebenfalls wieder zueinander radial versetzt sind.

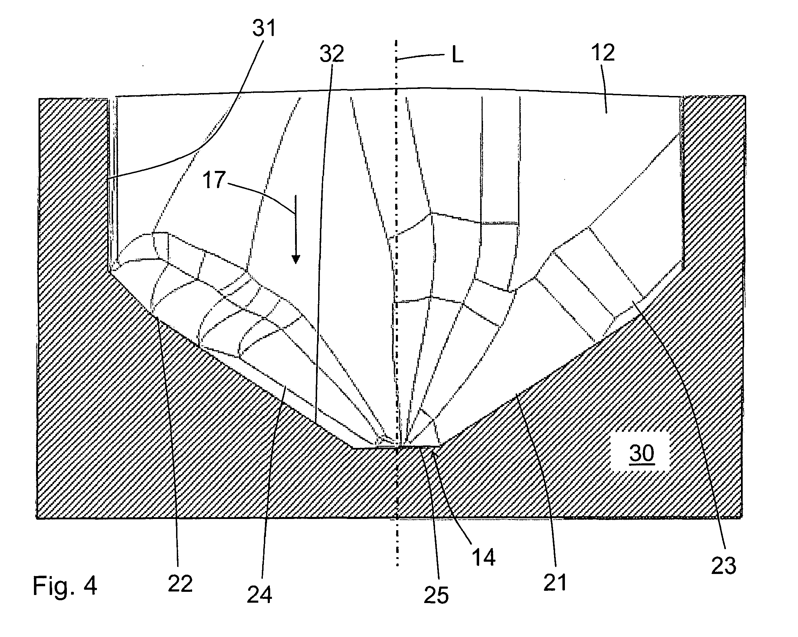

Während die insbesondere aus den Figuren 2 und 3 ersichtliche Bohrspitze 12 an ihrem freien Ende 14 in einer punktförmigen Spitze ausläuft, weist die aus Fig. 4 ersichtliche Bohrspitze 12 an ihrem freien Ende 14 wenigstens eine quer zur Längsachse L liegende, als Querschneide ausgebildete dritte Schneide 25 auf, an die sich die erste Schneide 21 nach radial aussen hin anschliesst. Ansonsten weist die Selbstbohrschraube gemäss Fig. 4 jedoch die gleiche Ausgestaltung auf, wie die aus den Figuren 1 bis 3 ersichtliche Selbstbohrschraube 10, weshalb diesbezüglich vollumfänglich Bezug genommen wird auf die vorhergehende Beschreibung zu den Figuren 1 bis 3.

**Patentansprüche**

1. Selbstbohrschraube (10) mit einem wenigstens bereichsweise ein Gewinde (13) tragenden Schaft (11), der eine Längsachse (L) definiert und an dessen erstem Ende eine Bohrspitze (12) und an dessen gegenüberliegendem zweiten Ende ein Kopf (15) angeordnet ist, sowie mit wenigstens einer ersten Schneide (21) und mit wenigstens einer zweiten Schneide (22), die in einem radial äusseren Bereich der Bohrspitze (12) liegt, **dadurch gekennzeichnet, dass** die erste Schneide (21) ausschliesslich in einem radial inneren Bereich der Bohrspitze (12) angeordnet ist, wobei eine durch die erste Schneide (21) definierte abgewickelte Hüllkegel-Mantelfläche (A1) mit einer maximalen Abweichung von +/- 10 % einer durch die zweite Schneide (22) definierten abgewickelten Hüllkegel- Mantelfläche (A2) entspricht und wobei ein erster spitzer Winkel (alpha1) der ersten Schneide (21) zur Längsachse (L) mit einer maximalen Abweichung von +/- 5° einem zweiten spitzen Winkel (alpha2) der zweiten Schneide (22) zur Längsachse (L) entspricht

2. Selbstbohrschraube nach Anspruch 1, **dadurch gekennzeichnet, dass** die erste Schneide (21) sich ausgehend von einem der Längsachse (L) nahen axialen Bereich bis zu einem ersten Radius (r1) erstreckt, während sich die zweite Schneide (22) von einem Aussenradius (ra) der Bohrspitze (12) zur Längsachse (L) hin bis zu einem zweiten Radius (r2) hin erstreckt.

3. Selbstbohrschraube nach Anspruch 1 oder 2, **dadurch gekennzeichnet, dass** der erste Radius (r1) und der zweite Radius (r2) mit einer maximalen Toleranz von +/- 20 % gleich gross sind.

4. Selbstbohrschraube nach Anspruch 2 oder 3, **dadurch gekennzeichnet, dass** der erste Radius (r1) durch die Funktion erster Radius (r1) = Aussenradius (ra) / Konstante x definiert ist, wobei die Konstante x einen Wert von 1,1 bis 1,7 aufweist.

5. Selbstbohrschraube nach einem der Ansprüche 1 bis 4, **dadurch gekennzeichnet, dass** die Schneiden (21, 22) eine Höhe (h1, h2) über der Schneidenbasis (23, 24) von 0,05 mm bis 0,5 mm aufweisen.

6. Selbstbohrschraube nach einem der Ansprüche 1 bis 5, **dadurch gekennzeichnet, dass** am freien Ende (14) der Bohrspitze (12) wenigstens eine quer zur Längsachse (L) liegende dritte Schneide (25) vorgesehen ist, an die sich die erste Schneide (21) nach radial aussen hin anschliesst.

**Claims**

1. Self drilling screw (10) with a shaft (11) with a thread (13) at least in some areas, which defines a longitudinal axis (L), at the first end of which a drill bit (12) is arranged and at the second opposite end of which a head (15) is arranged, and with at least a first cutting edge (21) and with at least a second cutting edge (22), which is in a radially outer area of the drill bit (12), **characterised in that** the first cutting edge (21) is arranged exclusively in a radially inner area of the drill bit (12), in which a projected envelope cone generated surface (A1) defined by the first cutting edge (21) with a maximum variation of +/- 10% corresponds to a projected envelope cone generated surface (A2) defined by the second cutting edge (22) and in which a first acute angle (alpha1) of the first cutting edge (21) to the longitudinal axis (L) with a maximum variation of +/- 5° corresponds to a second acute angle (alpha2) of the second cutting edge (22) to the longitudinal axis (L).

2. Self drilling screw according to claim 1, **characterised in that** the first cutting edge (21) extends from an axial area close to the longitudinal axis (L) as far as a first radius (r1), whereas the second cutting edge (22) extends from an outer radius (ra) of the drill bit (12) to the longitudinal axis (L) as far as a second radius (r2).

3. Self drilling screw according to claim 1 or 2, **characterised in that** the first radius (r1) and the second radius (r2) are the same size with a maximum tolerance of +/- 20%.

4. Self drilling screw according to claim 2 or 3, **characterised in that** the first radius (r1) is defined by the function of the first radius (r1) = external radius (ra) / constant x, in which the constant x has a value from 1.1 to 1.7.

5. Self drilling screw according to one of claims 1 to 4, **characterised in that** the cutting edges (21, 22) have a height (h1, h2) above the cutting edge base (23, 24) of 0.05 mm to 0.5 m.

6. Self drilling screw according to one of claims 1 to 5, **characterised in that** the free end (14) of the drill bit (12) is provided with at least a third cutting edge (25) crosswise to the longitudinal axis (L), to which the first cutting edge (21) is connected radially outwards.

**Revendications**

1. Vis auto-foreuse (10) comportant une tige (11) portant un filetage (13) au moins dans certaines zones, ladite tige définissant un axe longitudinal (L), une pointe de perçage (12) étant agencée à une première extrémité de celle-ci et une tête (15) étant agencée à une seconde extrémité opposée, et comportant au moins un premier tranchant (21) et au moins un deuxième tranchant (22) situé dans une zone radialement extérieure de la pointe de perçage (12), **caractérisée en ce que** le premier tranchant (21) est agencé exclusivement dans une zone radialement intérieure de la pointe de perçage (12), dans laquelle une surface circonférentielle conique enveloppante (A1) définie par le premier tranchant (21) correspond, avec un écart maximal de ± 10 %, à une surface circonférentielle conique enveloppante (A2) définie par le deuxième tranchant (22), et dans laquelle un premier angle aigu (alpha1) du premier tranchant (21) par rapport à l'axe longitudinal (L) correspond, avec un écart maximal de ± 5°, à un second angle aigu (alpha2) du deuxième tranchant (22) par rapport à l'axe longitudinal (L).

2. Vis auto-foreuse selon la revendication 1, **caractérisée en ce que** le premier tranchant (21) s'étend, en partant d'une zone axiale proche de l'axe longitudinal (L), jusqu'à un premier rayon (r1), tandis que le deuxième tranchant (22) s'étend à partir d'un rayon extérieur (ra) de la pointe de perçage (12) vers l'axe longitudinal (L) jusqu'à un second rayon (r2).

3. Vis auto-foreuse selon la revendication 1 ou 2, **caractérisée en ce que** le premier rayon (r1) et le second rayon (r2) sont égaux avec une tolérance maximale de ± 20 %.

4. Vis auto-foreuse selon la revendication 2 ou 3, **caractérisée en ce que** le premier rayon (r1) est défini par la fonction : premier rayon (r1) = rayon extérieur (ra) / constante x, dans laquelle la constante x est une valeur comprise entre 1,1 et 1,7.

5. Vis auto-foreuse selon l'une quelconque des revendications 1 à 4, **caractérisée en ce que** les tranchants (21, 22) ont une hauteur (h1, h2) au-dessus de la base de tranchant (23, 24) de 0,05 mm à 0,5 mm.

6. Vis auto-foreuse selon l'une quelconque des revendications 1 à 5, **caractérisée en ce que** sur l'extrémité libre (14) de la pointe de perçage (12) est prévu au moins un troisième tranchant (25) s'étendant transversalement à l'axe longitudinal (L), lequel troisième tranchant est adjacent au premier tranchant (21) radialement vers l'extérieur.

Fig. 1

Fig. 2

Fig. 3

Fig. 4

**EP 2 048 383 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040018069 A1